**Europäisches Patentamt**

**European Patent Office**

**Office européen des brevets**

(11) Veröffentlichungsnummer: **0 243 678 B1**

(19)
(12)

# EUROPÄISCHE PATENTSCHRIFT

(45) Veröffentlichungstag der Patentschrift: **18.11.93**

(51) Int. Cl.⁵: **C02F 3/32**, C02F 3/06

(21) Anmeldenummer: **87104382.4**

(22) Anmeldetag: **25.03.87**

(54) **Verfahren und Anlage zur Flüssigkeitsreinigung mit durchflussgesteuertem bepflanzten Filterbett.**

(30) Priorität: **27.03.86 GB 8607653**

(43) Veröffentlichungstag der Anmeldung:
**04.11.87 Patentblatt 87/45**

(45) Bekanntmachung des Hinweises auf die
Patenterteilung:
**18.11.93 Patentblatt 93/46**

(84) Benannte Vertragsstaaten:
**AT DE ES FR GB IT**

(56) Entgegenhaltungen:
**AT-B- 315 762**
**CH-A- 644 570**
**DD-A- 202 860**

(73) Patentinhaber: **Kickuth, Reinhold, Prof.Dr.**
**Gilsbergstrasse 9**
**D-37235 Hessisch Lichtenau(DE)**

(72) Erfinder: **Kickuth, Reinhold, Prof.Dr.**
**Gilsbergstrasse 9**
**D-37235 Hessisch Lichtenau(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast**
**Bökenbusch 41**
**Postfach 11 03 86**
**D-42531 Velbert (DE)**

**Beschreibung**

Die Erfindung betrifft ein Verfahren zur Reinigung von Flüssigkeiten, bei dem die zu reinigende Flüssigkeit in die Bodenmatrix eines mit aquatischen Pflanzen bepflanzten Filterbettes mit einem vorgegebenen Infiltrationsquerschnitt eintritt und dieses unter einem hydraulischen Gradienten zu einem Ablauf durchsetzt.

Die Erfindung betrifft auch eine Anlage zur Reinigung von Flüssigkeiten, enthaltend ein mit aquatischen Pflanzen bepflanztes Filterbett mit einem vorgegebenen Infiltrationsquerschnitt und einer Bodenmatrix, die von der zu reinigenden Flüssigkeit unter einem hydraulischen Gradienten zu einem Abfluß durchsetzt wird.

Durch die DD-A-202 860 ist es bei Algenteichen bekannt, die Abflußmenge mittels eines unabhängigen Steuerorgans zu steuern, derart, daß die Abflußmenge sowohl an den Reinigungsgrad des aus dem Algenteich austretenden Ablaufwassers als auch an die Wasserqualität des Vorfluters angepaßt ist, in den der Abfluß aus dem Algenteich eingeleitet wird. Das Steuerorgan ist an eine Meßstelle im Vorfluter und eine Meßstelle im Algenteich angeschlossen. Die Füllhöhe im Algenteich wird durch das Steuerorgan bei relativ hohen Temperaturen und starker Sonneneinstrahlung, also im Sommer, niedrig, dagegen bei relativ niedrigen Temperaturen und geringer Sonneneinstrahlung, also im Winter, hoch eingestellt.

Bepflanzte Filterbetten dienen der physikalischen, chemischen und biologischen Beeinflussung perkolierender Flüssigkeiten, insbesondere der Abwasserbehandlung, und sind in den vergangenen 10 bis 20 Jahren unter den Bezeichnungen "Wurzelraumanlagen", "Sumpfbeet-Klärstufen", "Schilfkläranlagen" und anderen bekannt geworden und werden im folgenden nach Aufbau und Wirkungsweise kurz beschrieben.

In Anlagen dieser Art perkoliert die zu behandelnde Flüssigkeit, z.B. Abwasser horizontal durch einen das bepflanzte Filterbett bildenden Bodenkörper, der durch die physikalische, chemische und biologische Aktivität von Wurzeln und Rhizomen bestimmter Sumpfpflanzen sekundär strukturiert wird und dadurch eine hohe Wasserleitfähigkeit erhält. Diese kann nach einer Reihe von Jahren Werte im Bereich von $K_f = 10^{-3}$ m/sec erreichen. Wegen der ständigen mechanischen und chemischen Aktivität und vor allem wegen des ständigen Massenwechsels der unterirdischen Organe bleiben hohe Durchlässigkeitsbeiwerte ($k_f$) auch bei dauernder Infiltration von Flüssigkeiten langfristig erhalten; selbst einer Verstopfung der Bodenporen durch mitgeführte Feststoffe kann dieser Vorgang entgegenwirken.

Die für die beabsichtigten Veränderungen am Infiltrat bzw. der zu reinigenden Flüssigkeit maßgebenden physikalischen, chemischen und biologischen Prozesse sind für die erfindungsgemäßen Steuerungsvorgänge unerheblich und werden daher hier im einzelnen nicht behandelt. Sie sind an anderer Stelle ausführlich beschrieben, vgl. z.B. DE-OS 29 44 421, EP-PS 0 028 360 des Anmelders; Veröffentlichung R. Kickuth, H. J. Grommelt, "Wurzelnahe Reaktionszonen in hydromorphen Böden", Int. Sympos. Gumpenstein 1982, S. 681 bis 688; DE-OS 34 06 004; DE-OS 24 18 979; Veröffentlichung A. G. Boon,"Report of a Visit by Members and Staff of WRC to Germany to Investigate the Root Zone Method for Treatment of Waste Waters", Water Research Processes, August 1985; Veröffentlichung L. Rodewald-Rudescu, "Das Schilfrohr", Die Binnengewässer Bd. XXVII, Schweizerbartsche Verlagsbuchhandlung Stuttgart, 1974.

In der Regel wird der das bepflanzte Filterbett bildende wirksame Bodenkörper des Filterbettes in geeigneter Weise gegen den Untergrund abgedichtet, um das Versickern der zu reinigenden Flüssigkeit in Richtung auf das Grundwasser zu unterbinden und die für dieses Reinigungssystem typische horizontale Perkolation durch das bepflanzte Filterbett zu gewährleisten.

Der Transport der so zu behandelnden Flüssigkeit wird durch die Transportgleichung

$$\emptyset \ (\mathrm{m}^2) \ = \ \frac{Q \ (\mathrm{m}^3/\mathrm{sec})}{v \ (\mathrm{m}/\mathrm{sec})}$$

beschrieben. Darin sind $v = k_f$(m/sec) $\cdot$ dh/ds nach DARCY die Strömungsgeschwindigkeit der Flüssigkeit entlang einem hydraulischen Gradienten dh/ds in einem Substrat mit dem Durchlässigkeitsbeiwert $k_f$(m/sec) und $\phi$ (m²) der Infiltrationsquerschnitt, um die zu reinigende Flüssigkeit mit der Schüttung Q (m³/sec) in dieser Weise zu transportieren.

Das verfahrenstypische und für den Flüssigkeitstransport maßgebende Grobporengefüge im Wurzelbereich der verwendeten Sumpfpflanzen bildet sich durch Umstrukturierung und Aggregatbildung aus dem vorgegebenen Ausgangsmaterial, meistens einem schwereren Boden mit bedeutenden Ton- und Schluffanteilen.

Hierdurch unterscheidet sich das Verfahren scharf von allen klassischen Infiltrationsverfahren, die sich auf die Transportleistungen eines vorgegebenen, primären Grobkorngefüges (Grobsand, Kies etc.) stützen.

Die eingangs genannten Verfahren und Anlagen mit dem verfahrensgemäß aggregierten und sekundär umstrukturierten, schwereren Boden erzielen sprunghafte Aktivitätssteigerungen, besitzen aber bedeutende betriebstechnische Nachteile und Probleme, die im folgenden genauer dargelegt werden.

Die biogene Umstrukturierung und Aggregierung des bepflanzten Filterbettes durch die vorerwähnten Sumpfpflanzen erfordert in der Regel eine längere Zeit, so daß von der Errichtung einer entsprechenden Anlage bis zu ihrer vollen Wirksamkeit vier und manchmal mehr Jahre vergehen können.

Erst wenn im Klimaxzustand das bepflanzte Filterbett durch die Tätigkeit der unterirdischen Organe voll erschlossen ist, kann man mit Durchlässigkeitsbeiwerten im Bereich von $k_f = 10^{-3}$ m/sec rechnen, auf denen die Dimensionierung solcher Anlagen in Bezug auf den Strömungsquerschnitt $\phi$ basiert.

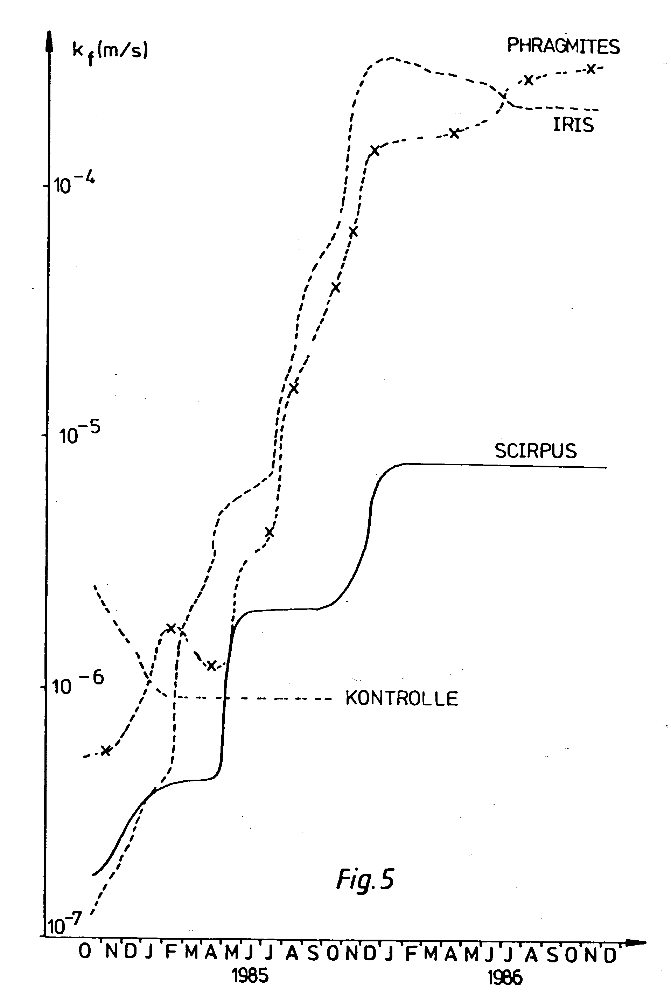

Der sich in dieser Weise etwa nach Maßgabe der Abbildung 5 entwickelnde Durchlässigkeitsbeiwert $k_f$ erlaubt daher in der Präphase nicht die Perkolation der vollen Flüssigkeitsmenge Q, für die eine solche Anlage ausgelegt wird.

Muß die Anlage jedoch von Anfang an die volle Flüssigkeitsmenge übernehmen, was besonders bei der Abwasserbehandlung der Regelfall ist, so müssen mehr oder weniger beträchtliche Teilströme über Planum, d.h. über die Anlagenoberfläche abgeführt werden. Obgleich nun dieser Teilstrom durchaus günstige chemische und biologische Veränderungen im Kontakt mit der Oberfläche des bepflanzten Filterbettes erfährt, sind solche Betriebszustände durchaus problematisch, weil

1. oberflächlich abfließendes Abwasser Geruchsbelästigungen und ästhetisch anstößige Situationen verursachen kann,

2. sich bei frischbepflanzten oder noch nicht biogen stabilisierten Filterbetten Erosionsrinnen auf der Oberfläche ausbilden, die sich im Laufe der Zeit beträchtlich vertiefen können und durch die das zu behandelnde Medium bzw. die zu reinigende Flüssigkeit fast unverändert dem Ablauf zuströmt,

3. die frisch bepflanzten oder noch nicht biogen stabilisierten bepflanzten Filterbetten noch nicht die volle Durchflußleistung erbringen,

4. die vertikal in das bepflanzte Filterbett eintretende zu reinigende Flüssigkeit auch Erosionserscheinungen, z.B. Feinteilchenverlagerungen innerhalb der Bodenmatrix des bepflanzten Filterbettes hervorrufen kann.

Weiterhin besteht bei voll entwickelten Anlagen dieser Art das Problem, daß unterschiedliche Zulaufraten der zu reinigenden Flüssigkeit, z.B. während Trockenphasen und Naßphasen mit unterschiedlichem Regenwasseranfall Veränderungen in der Hydromorphie und damit der Reinigungsleistung des bepflanzten Filterbettes verursachen.

Die Aufgabe der vorliegenden Erfindung besteht somit darin, ein Verfahren und eine Anlage der eingangs genannten Art zu schaffen, bei denen unter Vermeidung der vorstehend genannten Probleme die durch das bepflanzte Filterbett erzielte Reinigungswirkung stets optimal an die jeweiligen Betriebsbedingungen angepaßt ist.

Nach dem erfindungsgemäßen Verfahren wird diese Aufgabe dadurch gelöst, daß der Durchfluß bzw. das Durchflußmuster durch die Bodenmatrix des bepflanzten Filterbettes ablaufseitig gesteuert wird, derart, daß

a) mindestens ein Nebenströmungsweg mit ablaufseitigen Einstellmitteln zur Änderung des Strömungsquerschnittes und daher zur Regelung des anteiligen Durchflusses durch den mindestens einen Nebenströmungsweg vorgesehen ist, wobei dieser mindestens eine Nebenströmungsweg entweder aus

a1. einem Schotterbett unterhalb des Filterbettes mit einer vorgegebenen Anzahl von Ableitungsrohren oder

a2. einer vorgegebenen Anzahl von Längsdränagerohren oder

a3. einer vorgegebenen Anzahl von Querdränagerohren ausgewählt ist

und/oder

b) mittels einer Ablaufhubsteuerung an mindestens einem Ablaufrohr die Höhe des Ablaufspiegels und daher des hydraulischen Gradienten zwischen Höhe des Zulaufspiegels und Höhe des Ablaufspiegels in Anpassung an den anfallenden Zufluß der zu reinigenden Flüssigkeit geregelt wird, so daß die vollständige Hydromorphie der Bodenmatrix, die eine bestimmte hydraulische Leitfähigkeit besitzt, erhalten bleibt.

Nach der erfindungsgemäßen Anlage wird diese Aufgabe dadurch gelöst, daß eine ablaufseitige Steuerung für den Durchfluß bzw. das Durchflußmuster durch die Bodenmatrix des bepflanzten Filterbettes vorgesehen ist, derart, daß

a) mindestens ein Nebenströmungsweg mit ablaufseitigen Einstellmitteln zur Änderung des Strömungsquerschnittes und daher zur Regelung des anteiligen Durchflusses durch den mindestens einen Nebenströmungsweg vorgesehen ist, wobei dieser mindestens eine Nebenströmungsweg entweder aus

a1. einem Schotterbett unterhalb des Filterbettes mit einer vorgegebenen Anzahl von Ableitungsrohren oder

a2. einer vorgegebenen Anzahl von Längsdränagerohren oder

a3. einer vorgegebenen Anzahl von Querdränagerohren ausgewählt ist

und/oder

b) eine Ablaufhubsteuerung für die Höhe des Ablaufspiegels an mindestens einem Ablaufrohr und daher des hydraulischen Gradienten zwischen Höhe des Zulaufspiegels und Höhe des Ablaufspiegels in Anpassung an den anfallenden Zufluß der zu reinigenden Flüssigkeit, derart, daß die vollständige Hydromorphie der Bodenmatrix, die eine bestimmte hydraulische Leitfähigkeit besitzt, erhalten bleibt.

Durch die Erfindung werden die vorstehend erwähnten Probleme der oberflächlichen Abflüsse und oberflächlichen Erosion des bepflanzten Filterbettes vermieden. Wird bei Verwendung des Schotterbettes dieses an der dem bepflanzten Filterbett zugekehrten Seite mit einer durch das bepflanzte Filterbett abbaubaren Abdeckung abgedeckt, so wird während der Präphase eine Vertikalerosion innerhalb des bepflanzten Filterbettes wirksam verhindert.

Werden die Nebenströmungswege aus einer vorgegebenen Anzahl von Querdränagerohren gebildet, so läßt sich der hydraulische Gradient in jeder der so gebildeten Zonen an die jeweiligen Betriebsbedingungen des bepflanzten Filterbettes anpassen und die Gesamtdurchflußleistung des bepflanzten Filterbettes kann auch in der Präphase beträchtlich erhöht werden.

In weiterer Ausbildung des erfindungsgemäßen Verfahrens bzw. der erfindungsgemäßen Anlage wird der hydraulische Gradient zwischen der Höhe des Zulaufspiegels und der Höhe des Ablaufspiegels durch eine Ablaufhubsteuerung geregelt, und zwar in Anpassung an den jeweiligen Zufluß. Dadurch wird die Durchflußleistung an die Zulaufrate der zu reinigenden Flüssigkeit angepaßt. Auf diese Weise läßt sich die vollständige Hydromorphie und damit die optimale Reinigungsleistung des bepflanzten Filterbettes unter unterschiedlichsten Betriebsbedingungen aufrechterhalten.

Ausführungsbeispiele der Erfindung sind in den Abbildungen dargestellt und werden nachfolgend an Hand der Bezugszeichen im einzelnen erläutert und beschrieben. Es zeigen

Figur 1      eine schematische Schnittdarstellung eines ersten Ausführungsbeispiels der erfindungsgemäßen Anlage mit einer Einrichtung zur Steuerung anteiliger Durchströmungen;

Figur 2      eine schematische Draufsicht auf ein zweites Ausführungsbeispiel der erfindungsgemäßen Anlage mit einer Einrichtung zur Steuerung anteiliger Durchströmungen;

Figur 3      eine schematische Draufsicht auf ein drittes Ausführungsbeispiel der erfindungsgemäßen Anlage mit einer Einrichtung zur Ausbildung von Zonen mit erhöhtem hydraulischen Gradienten;

Figur 4a - 4c      schematische Schnittdarstellungen verschiedener Ausführungsformen von Teilen eines vierten Ausführungsbeispiels der erfindungsgemäßen Anlage mit einer Einrichtung zur Steuerung des hydraulischen Gradienten zwischen Zulauf und Ablauf; und

Figur 5      eine graphische Darstellung der Veränderungen des Durchlässigkeitswertes $k_f$ als Funktion der Zeit während der Präphase der erfindungsgemäßen Anlage bei Bepflanzung mit verschiedenen Pflanzenarten.

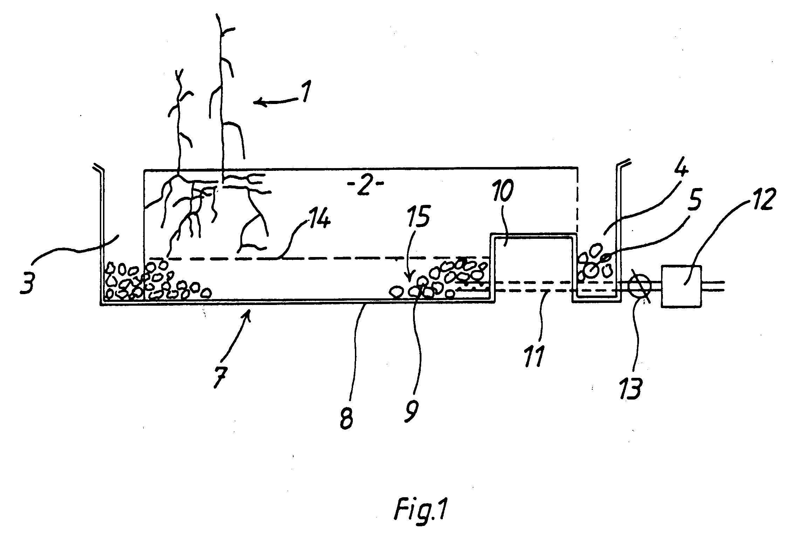

In den Figuren 1 bis 4 sind die nachfolgend beschriebenen Ausführungsbeispiele von Anlagen zur Reinigung von Flüssigkeiten, z.B. Abwasser durch ein bepflanztes Filterbett dargestellt. Diese Ausführungsbeispiele enthalten eine Durchflußsteuerung zur Herstellung jeweils eines bestimmten Durchströmungsmusters in dem bepflanzten Filterbett. Jedes dieser Durchströmungsmuster ermöglicht eine optimale Anpassung des Durchflusses bzw. der Durchflußleistung des bepflanzten Filterbettes an die jeweiligen Betriebsbedingungen des bepflanzten Filterbettes. Diese Betriebsbedingungen können nebeneinander oder auch nacheinander an demselben bepflanzten Filterbett auftreten, und es ist daher selbstverständlich, daß einzelne oder bestimmte ausgewählte Kombinationen oder alle der nachstehend beschriebenen und in den Figuren einzeln dargestellten Durchflußsteuerungen an einem gegebenen bepflanzten Filterbett vorgesehen werden können.

Der Aufbau und die Erstellung der bepflanzten Filterbetten ist aus der eingangs genannten Literatur im Prinzip bekannt. Es sei daher hier nur kurz und zusammenfassend erwähnt, daß ein in seiner Größe durch den jeweiligen Anwendungszweck bestimmtes Bett ausgehoben wird, das auf der Sohle und an den Seitenwänden mit einer für die zu reinigende Flüssigkeit undurchlässigen Membran oder Folie verkleidet wird. An den gegenüberliegenden Stirnseiten wird ein Zulauf ausgebildet, durch den die zu reinigende Flüssigkeit dem bepflanzten Filterbett zugeführt wird, und ein Ablauf, der die aus dem bepflanzten Filterbett austretende, gereinigte Flüssigkeit aufnimmt und beispielsweise einem Vorfluter zuführt. Zwischen Zulauf und Ablauf wird dabei ein in den Abbildungen nicht dargestelltes Sohlgefälle im Bereich von 1 bis 8 % vorgesehen. Das ausgehobene Bett wird mit einem geeigneten Bodenkörper, z.B. Parabrannerde (B-Horizont) oder monolithischem, lehmigen Sand ausgefüllt, der mit aquatischen Pflanzen, z.B. der Arten Phragmites, Iris, Scirpus und ähnlichen bepflanzt wird. Dafür werden generell Pflanzen eingesetzt, die über ihr Aerenchym ihrem Wurzelsystem und dem adhärenten Wurzelraum Sauerstoff zuführen können und dadurch in der hydromorphen Bodenmatrix des bepflanzten Filterbettes ein Muster aus aeroben und anaeroben Kleinbezirken aufbauen, die für die Reinigungsleistung des bepflanzten Filterbettes verantwortlich sind.

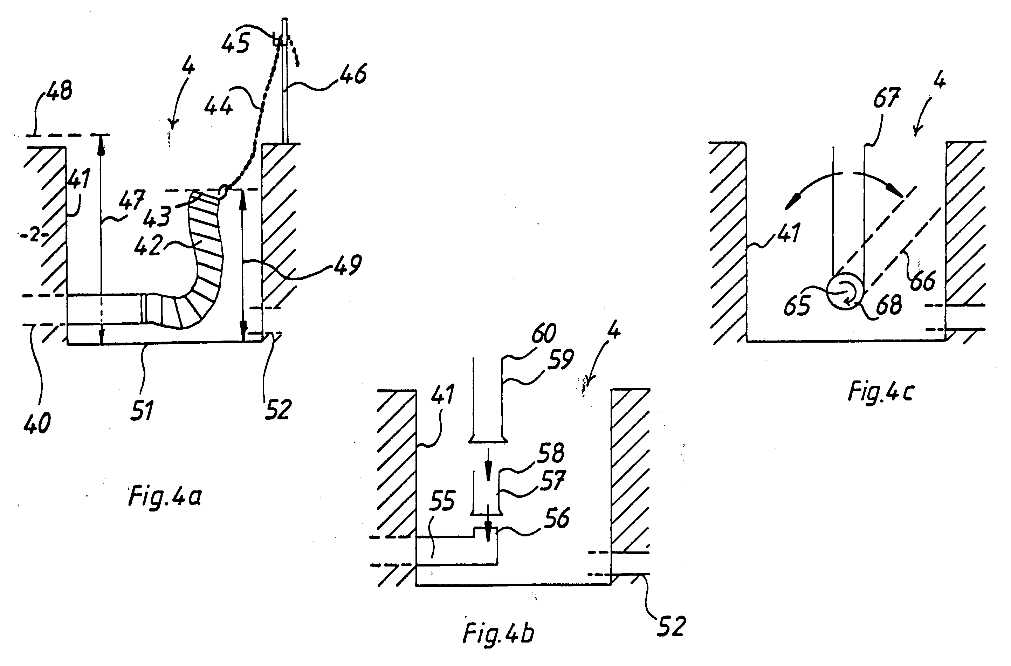

In dem in Figur 1 in einer Schnittansicht dargestellten Ausführungsbeispiel einer Anlage zur Reinigung von Flüssigkeiten wie Abwasser erkennt man das mit aquatischen Pflanzen 1 bepflanzte Filterbett 2, das an einer Stirnseite mit einem Zulauf 3 in Gestalt eines mit Schotter verfüllten Zulaufgrabens versehen ist. An der gegenüberliegenden Stirnseite befindet sich ein Ablauf 4, der als ein mit Schotter verfüllter Ablaufgraben ausgestaltet ist. In dem Ablauf 4 verläuft quer zu dem Filterbett 2 ein als Dränagerohr ausgebildetes Ablaufrohr 5, das die aus dem Filterbett 2 austretende gereinigte Flüssigkeit aufnimmt und zu einem Kontrollschacht bzw. zum Vorfluter führt. Anstelle des Ablaufrohres 5 können auch eine vorgegebene Anzahl von Ablaufrohren vorgesehen werden, die nach Art der in Figur 4a abgebildeten Ablaufrohre 40 ausgebildet sind und die gereinigte Flüssigkeit aus dem bepflanzten Filterbett 2 in den Ablauf 4 ableiten. Die Sohle 7 und die Seitenwände des Filterbettes 2 sind mit einer wasserundurchlässigen Folie 8 abgedeckt.

Zwischen dem Filterbett 2 und der zur Abdichtung gegen den Grundwasserkörper verwendeten Folie 8 ist ein Schotterbett 9 von 15 bis 20 cm Stärke angeordnet. Dieses ist ablaufseitig durch eine Ablaufsperre 10 in Form eines beispielsweise bis zu 40 cm hohen Bodenblocks, der das Schotterbett 9 um ein vorgegebenes Maß von z.B. bis zu 25 cm übersteigt und über den die Folie 8 geführt wird, gesperrt. Die Ablaufsperre 10 und die Folie 8 werden durch ein oder mehrere Ableitungsrohre 11 durchquert, von denen nur eines in der Schnittansicht von Figur 1 erkennbar ist. Die Ableitungsrohre 11 werden an einen gemeinsamen Schotterbettablauf 12 angeschlossen, der zu einem Ablaufschacht führt. In dem dargestellten Ausführungsbeispiel ist das bzw. jedes Ableitungsrohr 11 mit vorzugsweise kontinuierlich einstellbaren Einstellmitteln 13, z.B. Ventilen jeder geeigneten Art versehen, mit denen der Strömungsquerschnitt des zugehörigen Ableitungsrohres 11 auf an die jeweiligen Betriebsbedingungen der Anlage angepaßte Werte eingestellt werden kann. Die Einstellmittel 13 können stattdessen auch an dem gemeinsamen Schotterbettablauf 12 angeordnet sein.

Das Schotterbett 9 besitzt, insbesondere in der Präphase des bepflanzten Filterbettes 2 eine gegenüber dem bepflanzten Filterbett 2 erheblich höhere hydraulische Leitfähigkeit und verläuft zwischen dem Zulauf 3 und dem Ablauf 4 parallel zu dem bepflanzten Filterbett 2. Während des Betriebs der Anlage bilden daher das Schotterbett 9 und die Ableitungsrohre 11 einen Nebenströmungsweg 15, und die Einstellmittel 13 stellen den Durchfluß über den Nebenströmungsweg 15 ein. In dieser Anlage stellen somit der Nebenströmungsweg 15 und die diesen Nebenströmungsweg 15 beherrschenden Einstellmittel 13 eine Durchflußsteuerung dar, mittels derer in der Anlage ein Durchströmungsmuster ausgebildet wird, das durch die anteiligen Durchströmungen durch das bepflanzte Filterbett 2 und den Nebenströmungsweg 15 bestimmt wird.

So läßt sich durch Öffnen der Einstellmittel 13 im Nebenströmungsweg 15 eine beliebig starke Kurzschlußströmung zwischen dem Zulauf 3 und dem Ablauf 4 herstellen, durch die nach Maßgabe der jeweiligen Leitfähigkeitsentwicklung im bepflanzten Filterbett 2 die überschüssigen Flüssigkeitsmengen transportiert werden können. Dabei findet im Schotterbett 9 in Abhängigkeit von der jeweils verwendeten Schotterart eine durchaus nennenswerte chemische und biologische Veränderung an der perkolierenden Flüssigkeit statt, besonders bei Verwendung basischen Schottermaterials.

Zweckmäßigerweise wird der Nebenströmungsweg 15 bzw. das Schotterbett 9 gegen den wirksamen, überliegenden Bodenkörper durch eine unter dem Einfluß des bepflanzten Filterbettes 2 verrottbare Folie 14, z.B. ein Textilvlies, Jute- oder Zellstoffbahnen abgedeckt, um während der Bauarbeiten ein Eindringen von Feinboden aus dem bepflanzten Filterbett 2 in den Schotterkörper des Schotterbettes 9 zu verhindern. Im Laufe der Entwicklung des bepflanzten Filterbettes 2 ist es durchaus beabsichtigt, daß nach dem Verrotten der Folie 14 die Pflanzenwurzeln und der Feinboden in den Schotterkörper des Schotterbettes 9 einwandern und diesen dann in einen erhöhten Aktivitätszustand in Bezug auf das Reinigungsziel versetzen.

Neben der außerordentlichen Wirkung dieses Schotterbettes 9 im Sinne des Verfahrenszieles besteht ein weiterer Vorteil darin, daß man, insbesondere bei Verwendung von gerundeten Schottern, z.B. Grobkiesen und bei einer Packlage von 20 cm, die unterliegende wasserundurchlässige Folie 8 mit schwerem Baugerät befahren kann. Dieses erleichtert die baulichen Maßnahmen bei der Einbringung des wirksamen Bodenkörpers der Anlage.

Anstelle eines Schotterbettes 9, das den willkürlich einstellbaren Nebenströmungsweg 15 bildet, kann man das bepflanzte Filterbett 2 auch mit einer Längsdränage in Fließrichtung der zu behandelnden Flüssigkeit ausstatten. Im Prinzip ist deren Anordnung und Wirkungsweise die gleiche wie beim vorstehend erläuterten Schotterbett 9.

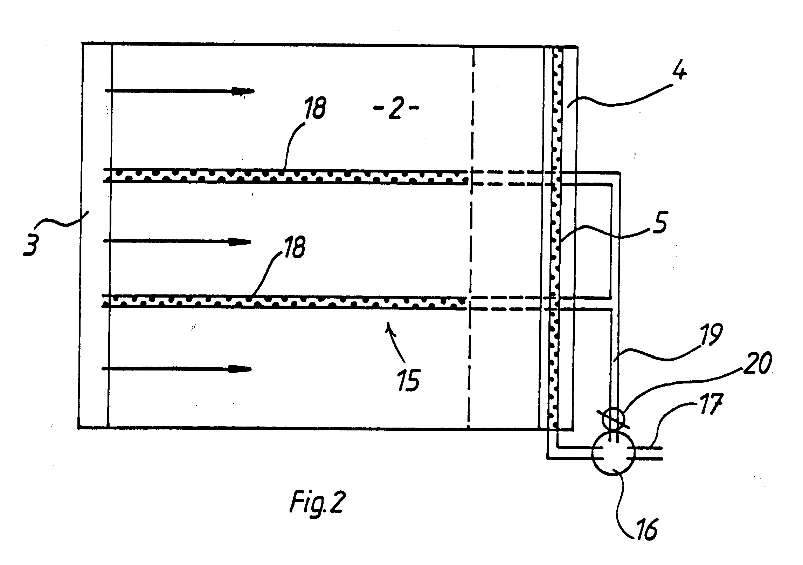

Eine solche Anlage ist als zweites Ausführungsbeispiel in Draufsicht in Fig. 2 dargestellt und darin sind gleiche oder analoge Elemente mit den gleichen Bezugszeichen wie in Figur 1 versehen. Man erkennt das bepflanzte Filterbett 2 mit dem Zulauf 3 und dem Ablauf 4 mit einem Ablaufrohr 5, das an einen Kontrollschacht 16 angeschlossen ist, der über einen weiteren Ablauf 17 zum Vorfluter führt. Der Nebenströmungsweg 15 wird hier von einer durch den Fließquerschnitt $\phi$ vorgegebenen Anzahl, im dargestellten Ausführungsbeispiel von 2 Längsdränagerohren 18 gebildet. Die Längsdränagerohre 18 verlaufen zwischen dem Zulauf 3 und dem Ablauf 4 parallel zum bepflanzten Filterbett 2 und vorzugsweise auf der Sohle dieses Filterbettes 2 und sind an einen gemeinsamen Längsdränageablauf 19 angeschlossen, der zum Kontrollschacht 16 führt. In dem dargestellten Ausführungsbeispiel ist der gemeinsame Längsdränageablauf 19 mit vorzugsweise kontinuierlich einstellbaren Einstellmitteln 20, z.B. einem Ventil geeigneter Art versehen, mittels dessen der Längsdränageabfluß in Anpassung an die jeweiligen Betriebsbedingungen der Anlage einstellbar ist. Stattdessen können auch entsprechend Figur 1 unabhängige und individuell einstellbare Einstellmittel an jedem einzelnen Längsdränagerohr 18 vorgesehen werden.

Ein sperrender Bodenblock am Ende der Fließstrecke wie beim Schotterbett 9 in Figur 1 braucht bei dieser Anordnung nicht vorgesehen zu werden. Jedoch werden auch hier die Längsdränagerohre 18 außerhalb des bepflanzten Filterbettes 2 als geschlossene Rohre weitergeführt.

Die vorstehend beschriebene Längsdränage ist nicht ganz so wirksam wie das Schotterbett 9 unter dem bepflanzten Filterbett 2, jedoch in den meisten Fällen bautechnisch einfacher herzurichten und meistens auch wesentlich billiger. Ein Schutz der Abdichtungsfolie oder wasserundurchlässigen Folie 8 gegenüber dem Befahren mit schwererem Baugerät wird naturgemäß mit dieser Anordnung nicht erreicht.

Durch den Nebenströmungsweg 15 können nicht nur die hydraulischen Engpässe während der Entwicklungszeit der bepflanzten Filterbett-Anlage wirksam überwunden werden, sondern es können auch die während der Entwicklungszeit erforderlichen Trockenphasen zuverlässig herbeigeführt werden. Zur schnelleren und wirksamen Tiefenentwicklung der unterirdischen Organe der Bepflanzung bis in die Normtiefe von ca. 0,6 m, wie sie für solche Anlagen typisch ist, sind kurzzeitige Trockenphasen sehr vorteilhaft. Diese sollten nach heutiger Kenntnis in die Hauptvorschubzeiten der unterirdischen Organe, d.h. in den Früh- und Nachwinter fallen, vgl. die eingangs erwähnte Veröffentlichung von L. Rodewald-Rudescu. Während dieser Zeit nun sind insbesondere in schwereren Böden wie sie verfahrenstypisch eingesetzt werden, kaum wirksame Entwässerungen herbeizuführen, es sei denn durch ein wirksames Dränagesystem. Auch in dieser Beziehung erweist sich die hier beschriebene Durchflußsteuerung als vorteilhaft, wenn nicht sogar unentbehrlich.

In den vorstehend beschriebenen Anlagen wurde durch die Durchflußsteuerung die Menge Q der die Anlage durchsetzenden Flüssigkeit über den Durchfluß durch den Nebenströmungsweg 15 gesteuert.

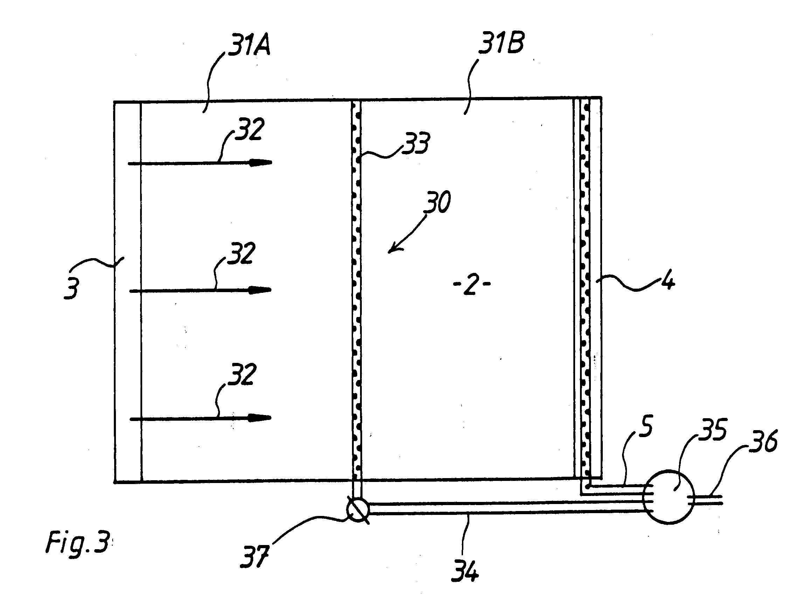

Auf einem anderen Prinzip beruht das nachstehend im Zusammenhang mit Figur 3 beschriebene Ausführungsbeispiel.

Gemäß der eingangs aufgeführten Transportgleichung ist die Durchflußmenge Q der pro Zeiteinheit durch die Anlage perkolierenden Flüssigkeit

$$Q \ (m^3/sec) = \phi \ (m^2) \cdot k_f \cdot dh/ds$$

proportional dem Durchlässigkeitsbeiwert $k_f$ des bepflanzten Filterbettes 2. Wie bereits eingangs ausgeführt, erreicht dieser in den ersten Betriebsjahren noch nicht den Klimaxwert von etwa $10^{-3}$ m/sec, auf den sich die Dimensionierung des Transportquerschnitts $\phi$ gründet, sondern entwickelt sich während der Präphase etwa nach Maßgabe von Figur 5 aus geringen Ausgangswerten heraus.

Die in Figur 3 schematisch in Draufsicht dargestellte Anlage, die wie die vorstehend beschriebenen Anlagen ein bepflanztes Filterbett 2 mit einem Zulauf 3 und einem Ablauf 4 mit einem Ablaufrohr 5 enthält, gestattet eine erhöhte Durchflußmenge Q durch eine Erhöhung des hydraulischen Gradienten dh/ds.

Dazu wird das bepflanzte Filterbett 2 mit einem Nebenströmungsweg 30 versehen, der aus einer Querdränage besteht, die das bepflanzte Filterbett 2 in eine vorgegebene Anzahl von benachbarten Zonen oder Segmenten 31A, 31B ... unterteilt, die sich im wesentlichen quer zur Durchströmungsrichtung 32 durch das bepflanzte Filterbett 2 erstrecken. Die Querdränage wird durch eine vorgegebene Anzahl von Querdränagerohren gebildet, die vorzugsweise auf der Sohle des bepflanzten Filterbettes 2 und auf der stromabwärtigen Seite der zugehörigen Zone verlegt sind. In dem dargestellten Ausführungsbeispiel ist nur ein Querdränagerohr 33 vorgesehen, das zwei Zonen oder Segmente 31A und 31B bestimmt. Das Querdränagerohr 33 ist an einen Querdränageablauf 34 angeschlossen, der in einen Kontrollschacht 35 mündet, in den auch das Ablaufrohr 5 mündet und der über einen weiteren Ablauf 36 zum Vorfluter führt. In Abhängigkeit von den Anforderungen und den Abmessungen der Anlage können auch mehrere parallel und im Abstand angeordnete Querdränagerohre 33 vorgesehen sein, die dann gemeinsam an den Querdränageablauf 34 angeschlossen werden. Das bzw. jedes einzelne Querdränagerohr 33 ist mit einem Einstellmittel 37, z.B. einen Ventil jeder geeigneten Art versehen, mittels dessen der Strömungsquerschnitt jedes einzelnen Querdränagerohres 33 unabhängig und individuell einstellbar ist. Die Einstellmittel 37 können stattdessen auch an dem gemeinsamen Querdränageablauf vorgesehen werden.

In jedem der so geschaffenen Zonen oder Segmente 31A, 31B des bepflanzten Filterbettes 2 werden Q/n Anteile der Schüttung bzw. Durchflußmenge Q gegen die Sohldränagen entlang einem Gradienten n • dh/ds infiltriert. So ergibt sich ein Multiples der hydraulischen Leistung des bepflanzten Filterbettes 2, in dem ursprünglich und unter Ausschaltung der Querdränage nur eine Schüttung bzw. Durchflußmenge Q entlang einem hydraulischen Gradienten von dh/ds infiltriert wird. Bei diesem Ausführungsbeispiel bilden somit die Querdränagerohre 33 den Nebenströmungsweg 30, und die Einstellmittel 37 stellen den Durchfluß über den Nebenströmungsweg 30 ein. In dieser Anlage stellen somit der Nebenströmungsweg 30 und die diesen Nebenströmungsweg 30 beherrschenden Einstellmittel 37 die Durchflußsteuerung dar, mittels derer in der Anlage ein Durchströmungsmuster ausgebildet wird, das durch Zonen oder Segmente 31A, 31B ... von erhöhtem hydraulischen Gradienten bestimmt wird.

Der Vorteil dieses Ausführungsbeispiels besteht darin, daß von Anfang an ein hoher Reinigungsgrad der infiltrierten Flüssigkeit erreicht wird, weil im Gegensatz zu den vorstehend beschriebenen Ausführungsbeispielen keine Teilmengen kurzschlüssig gegen den Ablauf sondern die gesamte Flüssigkeit durch den aktiven Bodenkörper des bepflanzten Filterbettes 2 geführt wird. Vorteilhaft ist ferner, daß entsprechende Querdränagen auch nach der Einrichtung und Inbetriebnahme des bepflanzten Filterbettes 2 nachträglich und auch wenn ein Sanierungsbedarf der Anlage besteht, eingebaut werden können. Nachteilig ist gegenüber den vorstehend beschriebenen Ausführungsbeispielen die geringe Regelungsbreite und das nicht völlig ausschließbare Auftreten oberflächlicher Flüssigkeits-Teilströme, von denen Gerüche ausgehen können und die erosiv wirken.

Die in Figuren 4a bis 4c dargestellten Ausführungsformen des vierten Ausführungsbeispiels betreffen eine Filterbett-Anlage der vorstehend beschriebenen Art, von der zur Vereinfachung nur der Ablauf 4 dargestellt ist. Dieser Ablauf 4 ist mit einer Ablaufhubsteuerung versehen, mittels derer als Durchströmungsmuster des bepflanzten Filterbettes 2 der hydraulische Gradient zwischen der Höhe des Zulaufspiegels am Zulauf und der Höhe des Ablaufspiegels am Ablauf 4 und damit über die gesamte Fließstrecke einstellbar ist. Diese Ablaufhubsteuerung kann allein als einzige Durchflußsteuerung vorgesehen sein, wird aber vorteilhafterweise in Kombination mit wenigstens einer der im Zusammenhang mit den vorstehenden Ausführungsbeispielen beschriebenen Durchflußsteuerungen eingesetzt.

Nach der Dimensionierungsformel für den Flächenbedarf einer bepflanzten Filterbett-Anlage ist der Flächenbedarf

$$F \ (m^2) = D \cdot Q_d \ (m^3/d) \ (\ln c_o - \ln c_T) \ .$$

Darin sind D ein stoffspezifischer Reaktionskoeffizient, Q die Schüttung oder Durchflußmenge pro Zeiteinheit, $c_o$ die Zulaufkonzentration eines Laststoffes, von dem die Flüssigkeit befreit werden soll, und $c_T$ die gewünschte Ablaufkonzentration.

Die Formel besagt auch, daß eine Fläche $F_{max}$ existiert, die bei einem bestimmten verdünnenden Zufluß $n \cdot Q_d$ und einer entsprechend herabgesetzten Zulaufkonzentration $c_o/n$ das beabsichtigte Ablaufergebnis $c_T$ erbringt. Dieses genau sind die Bedingungen bei sogenannten Mischkanalisationsbereichen, in denen häusliches Abwasser bei Regenereignissen mehr oder weniger verdünnt den Zulauf des wirksamen bzw. bepflanzten Filterbettes 2 erreicht. Es sind mathematische Methoden zur Berechnung von $F_{max}$ bekannt, die aber für die erfindungsgemäßen Anlagen mit Durchflußsteuerungen ohne Bedeutung sind. Jedenfalls führen sie für den "worst case" zu Flächenansprüchen bei bestimmten Verdünnungsgraden durch Fremdwasser, die beträchtlich über denen für den Trockenwetterzufluß liegen.

Dimensioniert man also das bepflanzte Filterbett 2 gemäß den Anforderungen beim ungünstigsten Verdünnungsfall, so ist das bepflanzte Filterbett 2 für den Trockenwetterfall, der den überwiegenden Teil der Betriebszustände ausmacht, erheblich überdimensioniert. Diese Überdimensionierung ist jedoch für die Eliminationsleistung der bepflanzten Filterbett-Anlage keineswegs gleichgültig oder gar günstig, denn die Wirksamkeit des bepflanzten Filterbettes 2 ist weitgehend an die dauernde und vollständige Hydromorphie der wirksamen Bodenmatrix des bepflanzten Filterbettes 2 gebunden. Teilgefüllte bepflanzte Filterbetten 2 entfalten ihre volle Wirksamkeit insbesondere für die Entfernung von Stickstoffverbindungen, von Phosphaten und von refraktären organischen Substanzen nicht.

Dieser Schwierigkeit läßt sich wirksamst begegnen dadurch, daß man, wie dargelegt, den hydraulischen Gradienten zwischen der Höhe des Zulaufspiegels und der Höhe des Ablaufspiegels je nach Betriebszustand verändert. Dadurch verändert sich die Vorschubgeschwindigkeit v der zu reinigenden Flüssigkeit im bepflanzten Filterbett 2 bzw. deren Verweildauer T, so daß ständig ein hydromorpher Bodenkörper mit optimalen Eliminationsleistungen vorhanden ist.

Bei der ersten Ausführung gemäß Figur 4a münden ein oder mehrere aus dem bepflanzten Filterbett 2 heraustretende Ablaufrohre 40 in einen Ablaufschacht 41 des Ablaufs 4. Jedes Ablaufrohr 40, von denen in Figur 4a nur eines sichtbar ist, ist ausgangsseitig mit einem Ende eines flexiblen Rohres 42 verbunden, dessen freies Ende 43 über ein Verbindungsglied 44 wie eine Kette an einem beispielsweise hakenförmigen Befestigungselement 45 eines Trägers 46 oberhalb des bepflanzten Filterbettes 2 angeordnet ist. Durch Änderung der verbindenden Länge des Verbindungsgliedes 44 oder der Höheneinstellung des Befestigungselementes 45 am Träger 46 läßt sich die Höhe des freien Endes 43 des flexiblen Rohres 42 in Anpassung an die jeweiligen Betriebsbedingungen ändern, d.h. der hydraulische Gradient zwischen der Höhe 47 des Zulaufspiegels 48 und der Höhe 49 des Ablaufspiegels 50 über dem Boden 51 des Ablaufschachtes 41 einstellen. Der Ablaufschacht 41 mündet über einen weiteren Ablauf 52 in den Vorfluter.

Die zweite Ausführungsform gemäß Figur 4b enthält ein oder mehrere aus dem bepflanzten Filterbett 2 heraustretende Ablaufrohre 55 mit einem nach oben offenen Ende 56 in einem Ablaufschacht 41 des Ablaufs 4, der über einen weiteren Ablauf 52 zum Vorfluter führt. Die Höhe 49 des Ablaufspiegels 50 wird bei dieser Ausführungsform durch das freie Ende 58, 60 von rohrförmigen Steckmoduln 57 bzw. 59 unterschiedlicher Länge bestimmt, die in bekannter Weise auf das offene Ende 56 des zugehörigen Ablaufrohres 55 aufsteckbar sind und deren Länge in Anpassung an die jeweiligen Betriebsbedingungen ausgewählt wird.

Die dritte Ausführungsform gemäß Figur 4c enthält in einem Ablaufschacht 41 des Ablaufs 4 in dessen Längsrichtung ein Ablaufrohr 65, das ausgangsseitig durch übliche Schwenkverbindungsmittel 68 mit einem nach oben abgewinkelten Rohrarm 66 schwenkbar verbunden ist. Der Rohrarm 66 besitzt ein freies Ende 67. Die Höhe 49 des Ablaufspiegels 50 wird bei dieser Ausführungsform durch das freie Ende 67 des Rohrarms 66 bestimmt, der in Anpassung an die jeweiligen Betriebsbedingungen auf ausgewählte Schwenkwinkel eingestellt werden kann.

Vorteilhafterweise kann aber anstelle der vorstehend beschriebenen Ablaufhubsteuerungen die Einstellung der Höhe 49 des Ablaufspiegels 50 auch in Abhängigkeit von der hydraulischen Situation auf der Seite des Zulaufs 3 unter Verwendung vorzugsweise automatisch gesteuerter Ventilmittel erfolgen.

Außer ihrer Funktion zur Durchflußsteuerung bei Mischwasser verarbeitenden Filterbett-Anlagen sind die in Figuren 4a bis 4c dargestellten Ablaufhubsteuerungen bei Kleinanlagen mit geringem Flächenanspruch und entsprechend kurzen Laufstrecken von hohem Nutzen und häufig unerläßlich, weil man bei steuerbarem Ablaufhub planerisch und baulich sämtliche Längen- und Breitenverhältnisse einer solchen Anlage realisieren kann.

Insbesondere beim Zusammenwirken der vorstehend beschriebenen Durchflußsteuerungen lassen sich bei einem bepflanzten Filterbett 2 sämtliche kritischen hydraulischen Situationen während der Entwicklungsphase oder Präphase und bei variablen Betriebszuständen leicht und zuverlässig beherrschen und somit eines der Haupthindernisse für die Anwendung von bepflanzten Filterbett-Anlagen und -Verfahren beseitigen.

Figur 5 zeigt in halblogarithmischer Darstellung die Änderung des Durchlässigkeitsbeiwertes $k_f$ - (m/s) mit der Zeit in Parabraunerde in Abwesenheit und in Anwesenheit von Phragmites oder Iris sowie in monolithem Bodensubstrat aus lehmigem Sand in Anwesenheit von Scirpus.

**Patentansprüche**

1. Verfahren zur Reinigung von Flüssigkeiten, bei dem die zu reinigende Flüssigkeit in die Bodenmatrix eines mit aquatischen Pflanzen (1) bepflanzten Filterbettes (2) mit einem vorgegebenen Infiltrationsquerschnitt eintritt und dieses unter einem hydraulischen Gradienten zu einem Ablauf (4) durchsetzt,
   dadurch gekennzeichnet, daß der Durchfluß bzw. das Durchflußmuster durch die Bodenmatrix des bepflanzten Filterbettes (2) ablaufseitig gesteuert wird, derart, daß
      a) mindestens ein Nebenströmungsweg (15; 30) mit ablaufseitigen Einstellmitteln (13; 20; 37) zur Änderung des Strömungsquerschnitts und daher zur Regelung des anteiligen Durchflusses durch den mindestens einen Nebenströmungsweg (15; 30) vorgesehen ist, wobei dieser mindestens eine Nebenströmungsweg (15; 30) entweder aus
         a1. einem Schotterbett (9) unterhalb des Filterbettes (2) mit einer vorgegebenen Anzahl von Ableitungsrohren (11) oder
         a2. einer vorgegebenen Anzahl von Längsdränagerohren (18) oder

a3. einer vorgegebenen Anzahl von Querdränagerohren (33) ausgewählt ist, und/oder

b) mittels einer Ablaufhubsteuerung an mindestens einem Ablaufrohr (40; 55; 65) die Höhe (49) des Ablaufspiegels (50) und daher des hydraulischen Gradienten zwischen Höhe (47) des Zulaufspiegels (48) und Höhe (49) des Ablaufspiegels (50) in Anpassung an den anfallenden Zufluß der zu reinigenden Flüssigkeit geregelt wird, so daß die vollständige Hydromorphie der Bodenmatrix, die eine bestimmte hydraulische Leitfähigkeit besitzt, erhalten bleibt.

2. Verfahren nach Anspruch 1, dadurch gekennzeichnet, daß parallel zu dem bepflanzten Filterbett (2) mit einer vorgegebenen hydraulischen Leitfähigkeit der mindestens eine Nebenströmungsweg (15) mit einer im Vergleich zum bepflanzten Filterbett (2) höheren hydraulischen Leitfähigkeit angelegt wird.

3. Verfahren nach Anspruch 2, dadurch gekennzeichnet, daß der mindestens eine Nebenströmungsweg (15) parallel zum bepflanzten Filterbett (2) an den Zulauf (3) und an den Ablauf (4) des bepflanzten Filterbettes (2) angeschlossen wird.

4. Verfahren nach Anspruch 2 oder 3, dadurch gekennzeichnet, daß das Schotterbett (9) auf eine wasserundurchlässige Folie (8) aufgeschüttet wird, daß das Schotterbett (9) ablaufseitig durch eine Ablaufsperre (10) abgeschlossen wird, die das Schotterbett (9) um ein vorgegebenes Maß übersteigt, und daß die vorgegebene Anzahl von Ableitungsrohren (11) über einen Teil der Länge des Schotterbettes (9) und durch die Ablaufsperre (10) hindurch verlegt wird.

5. Verfahren nach Anspruch 4, dadurch gekennzeichnet, daß die Ableitungsrohre (11) an einen gemeinsamen Schotterbettablauf (12) angeschlossen werden und daß der anteilige Durchfluß durch das Schotterbett (9) durch Änderung des Strömungsquerschnittes an dem gemeinsamen Schotterbettablauf (12) eingestellt wird.

6. Verfahren nach Anspruch 4, dadurch gekennzeichnet, daß der anteilige Durchfluß durch das Schotterbett (9) durch unabhängige Änderung des Strömungsquerschnittes an jedem einzelnen Ableitungsrohr (11) der vorgegebenen Anzahl von Ableitungsrohren (11) eingestellt wird.

7. Verfahren nach Anspruch 4, dadurch gekennzeichnet, daß das Schotterbett (9) an der dem bepflanzten Filterbett (2) zugekehrten Seite durch eine durch das bepflanzte Filterbett (2) abbaubare Folie (14) abgedeckt wird.

8. Verfahren nach Anspruch 3, dadurch gekennzeichnet, daß die vorgegebene Anzahl von Längsdränagerohren (18) an einen gemeinsamen Längsdränageablauf (19) angeschlossen wird.

9. Verfahren nach Anspruch 8, dadurch gekennzeichnet, daß die Längsdränagerohre (18) auf der Sohle des bepflanzten Filterbettes (2) verlegt werden.

10. Verfahren nach Anspruch 8, dadurch gekennzeichnet, daß der anteilige Durchfluß durch die Längsdränagerohre (18) durch Änderung des Strömungsquerschnittes an dem gemeinsamen Längsdränageablauf (19) eingestellt wird.

11. Verfahren nach Anspruch 8, dadurch gekennzeichnet, daß der anteilige Durchfluß durch die Längsdränagerohre (18) durch unabhängige Änderung des Strömungsquerschnittes an jedem einzelnen Längsdränagerohr (18) der vorgegebenen Anzahl von Längsdränagerohren (18) eingestellt wird.

12. Verfahren nach einem der Ansprüche 1 bis 11, dadurch gekennzeichnet, daß das Durchströmungsmuster von einer vorgegebenen Anzahl benachbarter Zonen (31A, 31B) gebildet wird, die sich im wesentlichen quer zur Durchströmungsrichtung (32) durch das bepflanzte Filterbett (2) erstrecken und einen im Vergleich zum bepflanzten Filterbett (2) erhöhten, veränderlichen hydraulischen Gradienten besitzen, und daß die vorgegebene Anzahl von Querdränagerohren (33) jeweils auf der Sohle des bepflanzten Filterbettes (2) auf der stromabwärtigen Seite der zugehörigen Zone (31A, 31B) verlegt wird.

13. Verfahren nach Anspruch 12, dadurch gekennzeichnet, daß die vorgegebene Anzahl von Querdränagerohren (33) außerhalb des bepflanzten Filterbettes (2) an einen gemeinsamen Querdränageablauf (34) angeschlossen wird und daß der hydraulische Gradient durch Änderung des Strömungsquerschnittes an dem gemeinsamen Querdränageablauf (34) eingestellt wird.

14. Verfahren nach Anspruch 12, dadurch gekennzeichnet, daß die vorgegebene Anzahl von Querdränagerohren (33) außerhalb des bepflanzten Filterbettes (2) an einen gemeinsamen Querdränageablauf (34) angeschlossen wird und daß der hydraulische Gradient durch unabhängige Änderung des Strömungsquerschnittes jedes einzelnen Querdränagerohres (33) eingestellt wird.

15. Verfahren nach einem der Ansprüche 1 bis 14, dadurch gekennzeichnet, daß die aus dem bepflanzten Filterbett (2) austretende gereinigte Flüssigkeit durch mindestens ein Ablaufrohr (40) geleitet wird, daß das mindestens eine Ablaufrohr (40) ausgangsseitig an mindestens ein flexibles Rohr (42) angeschlossen wird, und daß die Höhe (49) des Ablaufspiegels (50) durch die Höhe des freien Endes (43) des flexiblen Rohres (42) eingestellt wird.

16. Verfahren nach Anspruch 15, dadurch gekennzeichnet, daß die aus dem bepflanzten Filterbett (2) austretende gereinigte Flüssigkeit durch mindestens ein Ablaufrohr (55) mit einem nach oben offenen Ende (56) geleitet wird und die Höhe (49) des Ablaufspiegels (50) durch auf das offene Ende (56) aufsteckbare rohrförmige Steckmodule (57, 59) vorgewählter Länge eingestellt wird.

17. Verfahren nach Anspruch 15, dadurch gekennzeichnet, daß die aus dem bepflanzten Filterbett (2) austretende gereinigte Flüssigkeit durch mindestens ein Ablaufrohr (65) geleitet wird, daß an das mindestens eine Ablaufrohr (65) ausgangsseitig mindestens ein nach oben abgewinkelter Rohrarm (66) schwenkbar angeschlossen wird und daß die Höhe (49) des Ablaufspiegels (50) durch den Schwenkwinkel des Rohrarms (66) eingestellt wird.

18. Anlage zur Reinigung von Flüssigkeiten, enthaltend ein mit aquatischen Pflanzen (1) bepflanztes Filterbett (2) mit einem vorgegebenen Infiltrationsquerschnitt und einer Bodenmatrix, die von der zu reinigenden Flüssigkeit unter einem hydraulischen Gradienten zu einem Abfluß (4) durchsetzt wird, gekennzeichnet durch eine ablaufseitige Steuerung für den Durchfluß bzw. das Durchflußmuster durch die Bodenmatrix des bepflanzten Filterbettes (2), derart, daß
a) mindestens ein Nebenströmungsweg (15; 50) mit ablaufseitigen Einstellmitteln (13; 20; 37) zur Änderung des Strömungsquerschnittes und daher zur Regelung des anteiligen Durchflusses durch den mindestens einen Nebenströmungsweg (15; 30) vorgesehen ist, wobei dieser mindestens eine Nebenströmungsweg (15; 30) entweder aus
a1. einem Schotterbett (9) unterhalb des Filterbettes (2) mit einer vorgegebenen Anzahl von Ableitungsrohren (11) oder
a2. einer vorgegebenen Anzahl von Längsdränagerohren (18) oder
a3. einer vorgegebenen Anzahl von Querdränagerohren (33) ausgewählt ist,
und/oder
b) eine Ablaufhubsteuerung für die Höhe (49) des Ablaufspiegels (50) an mindestens einem Ablaufrohr (40; 55; 65) und daher des hydraulischen Gradienten zwischen Höhe (47) des Zulaufspiegels (48) und Höhe (49) des Ablaufspiegels (50) in Anpassung an den anfallenden Zufluß der zu reinigenden Flüssigkeit, derart, daß die vollständige Hydromorphie der Bodenmatrix, die eine bestimmte hydraulische Leitfähigkeit besitzt, erhalten bleibt.

19. Anlage nach Anspruch 18, dadurch gekennzeichnet, daß der mindestens eine Nebenströmungsweg (15) parallel zu dem bepflanzten Filterbett (2) verläuft, das eine bestimmte hydraulische Leitfähigkeit besitzt, und daß der mindestens eine Nebenströmungsweg (15) im Vergleich zu dem bepflanzten Filterbett (2) eine höhere Leitfähigkeit besitzt.

20. Anlage nach Anspruch 18, dadurch gekennzeichnet, daß der mindestens eine Nebenströmungsweg (15) parallel zu dem bepflanzten Filterbett (2) an den Zulauf (3) und an den Ablauf (4) angeschlossen ist.

21. Anlage nach Anspruch 19 oder 20, dadurch gekennzeichnet, daß das Schotterbett (9) auf eine wasserundurchlässige Folie (8) aufgeschüttet ist, daß das Schotterbett (9) ablaufseitig durch eine Ablaufsperre (10) abgeschlossen ist, die das Schotterbett (9) um ein vorgegebenes Maß übersteigt, und daß sich die Ableitungsrohre (11) wenigstens über einen Teil der Länge des Schotterbettes (9) und durch die Ablaufsperre (11) hindurch erstrecken.

22. Anlage nach Anspruch 21, dadurch gekennzeichnet, daß die vorgegebene Anzahl von Ableitungsrohren (11) an einen gemeinsamen Schotterbettablauf (12) angeschlossen ist und die Einstellmittel als Mittel zur Einstellung des Strömungsquerschnittes des gemeinsamen Schotterbettablaufes (12) ausgebildet sind.

23. Anlage nach Anspruch 21, dadurch gekennzeichnet, daß die Einstellmittel (13) an jedem einzelnen Ableitungsrohr (11) angeordnet sind und als Mittel zur unabhängigen Einstellung des Strömungsquerschnittes jedes einzelnen Ableitungsrohres (11) ausgebildet sind.

24. Anlage nach Anspruch 21, dadurch gekennzeichnet, daß das Schotterbett (9) an der dem bepflanzten Filterbett (2) zugekehrten Seite mit einer durch das bepflanzte Filterbett (2) abbaubaren Folie (14) abgedeckt ist.

25. Anlage nach Anspruch 20, dadurch gekennzeichnet, daß die vorgegebene Anzahl von Längsdränagerohren (18) in das bepflanzte Filterbett (2) eingebettet und an einen gemeinsamen Längsdränageablauf (19) angeschlossen ist.

26. Anlage nach Anspruch 25, dadurch gekennzeichnet, daß die Längsdränagerohre (18) auf der Sohle des bepflanzten Filterbettes (2) verlegt sind.

27. Anlage nach Anspruch 25, dadurch gekennzeichnet, daß die Einstellmittel (20) an dem gemeinsamen Längsdränageablauf (19) angeordnet sind und als Mittel zur Einstellung des Strömungsquerschnittes des gemeinsamen Längsdränageablaufes (19) ausgebildet sind.

28. Anlage nach Anspruch 25, dadurch gekennzeichnet, daß die Einstellmittel (20) an jedem einzelnen Längsdränagerohr (18) angeordnet und als Mittel zur unabhängigen Einstellung des Strömungsquerschnittes jedes einzelnen Längsdränagerohres (18) ausgebildet sind.

29. Anlage nach einem der Ansprüche 18 bis 28, dadurch gekennzeichnet, daß das Durchströmungsmuster aus einer vorgegebenen Anzahl benachbarter Zonen (31A, 31B) gebildet ist, die sich im wesentlichen quer zur Durchströmungsrichtung (32) durch das bepflanzte Filterbett (2) erstrecken und im Vergleich zu dem nicht quer in Zonen (31A, 13B) unterteilten bepflanzten Filterbett (2) einen erhöhten, veränderlichen hydraulischen Gradienten besitzen, und daß die vorgegebene Anzahl von Querdränagerohren (33) jeweils auf der Sohle des bepflanzten Filterbettes (2) auf der stromabwärtigen Seite der zugehörigen Zone (31A, 31B) verlegt und an einen gemeinsamen Querdränageablauf (34) abgeschlossen sind.

30. Anlage nach Anspruch 29, dadurch gekennzeichnet, daß die Einstellmittel an dem gemeinsamen Querdränageablauf (34) angeordnet sind.

31. Anlage nach Anspruch 29, dadurch gekennzeichnet, daß die Einstellmittel (37) an jedem einzelnen Querdränagerohr (33) angeordnet und als Mittel zur unabhängigen Einstellung des Strömungsquerschnittes jedes einzelnen Querdränagerohres (33) ausgebildet sind.

32. Anlage nach einem der Ansprüche 18 bis 31, dadurch gekennzeichnet, daß der Ablauf (4) mindestens ein Ablaufrohr (40) aufweist, das die aus dem bepflanzten Filterbett (2) austretende, gereinigte Flüssigkeit aufnimmt, daß mindestens ein flexibles Rohr (42) an den Ausgang des mindestens einen Ablaufrohres (40) angeschlossen ist, und daß die Einstellmittel als Mittel (44, 45, 46) zur Einstellung der Höhe des offenen freien Endes (43) des flexiblen Rohres (42) ausgebildet sind.

33. Anlage nach einem der Ansprüche 18 bis 31, dadurch gekennzeichnet, daß der Ablauf (4) mindestens ein Ablaufrohr (55) mit einem nach oben offenen Ende (56) aufweist, das die aus dem bepflanzten Filterbett (2) austretende, gereinigte Flüssigkeit aufnimmt, und daß die Einstellmittel als auf das offene Ende (56) des mindestens einen Ablaufrohres (55) aufsteckbare, rohrförmige Steckmodule (57, 59) vorgegebener Länge mit offenen freien Enden (58, 60) ausgebildet sind.

34. Anlage nach einem der Ansprüche 18 bis 31, dadurch gekennzeichnet, daß der Ablauf (4) mindestens ein Ablaufrohr (65) aufweist, das die aus dem bepflanzten Filterbett (2) austretende, gereinigte Flüssigkeit aufnimmt, daß an ein offenes Ende des mindestens einen Ablaufrohres (65) ein nach oben abgewinkelter Rohrarm (66) mit einem offenen freien Ende (67) schwenkbar angeschlossen ist und daß die Einstellmittel als Schwenkverbindungsmittel (68) zur Einstellung eines vorgegebenen Schwenkwinkels des Rohrarms (66) ausgebildet sind.

**Claims**

1. Method of purifying liquids, in which method the liquid to be purified enters the soil matrix of a filter bed (2) which is planted with aquatic plants (1) and has a predetermined infiltration cross-section, and passes therethrough at a hydraulic gradient to an outflow (4), characterised in that the throughflow or throughflow-pattern through the soil matrix of the planted filter bed (2) is controlled on the side of the outflow in a manner such that

a) there is provided at least one by-pass flow passage (15; 30) including adjusting means (13; 20; 37) on the side of the outflow for varying the throughflow cross-section and thus for regulating the proportional throughflow through the at least one by-pass flow passage (15; 30), said at least one by-pass flow passage (15; 30) being selected from

    a1. a gravel bed (9) placed below the filter bed (2) and including a predetermined number of discharge pipes (11), or

    a2. a predetermined number of lengthwisely extending drain pipes (18), or

    a3. a predetermined number of transversely extending drain pipes (33)

and/or

b) the height (49) of the outflow level (50) and thus the hydraulic gradient between the height (47) of the inflow level (48) and the height (49) of the outflow level (50) is regulated at at least one outflow pipe (40; 55; 65) by means of outflow lift control means in adaptation to the arriving inflow of the liquid to be purified such that there is maintained a fully hydromorphous state of the soil matrix having a defined hydraulic conductivity.

2.   Method according to claim 1, characterised in that the at least one by-pass flow passage (15) is installed parallel to the planted filter bed (2), which has a predetermined hydraulic conductivity, and has a higher hydraulic conductivity as compared to that of the planted filter bed (2).

3.   Method according to claim 2, characterised in that the at least one by-pass flow passage (15) is connected to the inflow (3) and the outflow (4) of the planted filter bed (2) in parallel to the planted filter bed (2).

4.   Method according to claim 2 or 3, characterised in that the gravel bed (9) is poured onto a water-impervious foil (8), that the gravel bed (9) is closed on the side of the outflow by means of an outflow bar (10) which extends above the gravel bed (9) by a predetermined extent, and that the predetermined number of discharge pipes (11) are installed along part of the length of the gravel bed (9) and through the outflow bar (10).

5.   Method according to claim 4, characterised in that the discharge pipes (11) are connected to a common gravel bed outflow (12) and that the proportional throughflow through the gravel bed (9) is adjusted by varying the throughflow cross-section at the common gravel bed outflow (12).

6.   Method according to claim 4, characterised in that the proportional throughflow through the gravel bed (9) is adjusted by independently varying the throughflow cross-section at each individual discharge pipe (11) of the predetermined number of discharge pipes (11).

7.   Method according to claim 4, characterised in that the gravel bed (9) is covered by a foil (14), which is degradable by the planted filter bed (2), on the side facing the planted filter bed (2).

8.   Method according to claim 3, characterised in that the predetermined number of lengthwisely extending drain pipes (18) are connected to a common lengthwise drain outflow (19).

9.   Method according to claim 8, characterised in that the lengthwisely extending drain pipes (18) are placed at the bottom of the planted filter bed (2).

10.   Method according to claim 8, characterised in that the proportional throughflow through the lengthwisely extending drain pipes (18) is adjusted by varying the throughflow cross-section at the common lengthwise drain outflow (19).

11.   Method according to claim 8, characterised in that the proportional throughflow through the lengthwisely extending drain pipes (18) is adjusted by independently varying the throughflow cross-section at each individual lengthwisely extending discharge pipe (18) of said predetermined number of lengthwisely extending discharge pipes (18).

12.   Method according to any one of claims 1 to 11, characterisend in that the throughflow pattern is formed by a predetermined number of adjacent zones (31A, 31B) which extend substantially transverse to the throughflow direction (32) through the planted filter bed (2) and have a variable hydraulic gradient which is increased as compared to that of the planted filter bed (2), and that the predetermined number of transversely extending drain pipes (33) are installed each at the bottom of the planted filter bed (2) and on the downstream side of the associated zone (31A, 31B).

**13.** Method according to claim 12, characterised in that the predetermined number of transversely extending drain pipes (33) are connected to a common transverse drain outflow (34) outside the planted filter bed (2) and that the hydraulic gradient is adjusted by varying the throughflow cross-section at the common transverse drain outflow (34).

**14.** Method according to claim 12, characterised in that the predetermined number of transversely extending drain pipes (33) are connected to a common transverse drain outflow (34) outside the planted filter bed (2) and that the hydraulic gradient is adjusted by independently varying the throughflow cross-section at each individual transversely extending drain pipe (33).

**15.** Method according to any one of claims 1 to 14, characterised in that the purified liquid issuing from the planted filter bed (2) is passed through at least one outflow pipe (40), that the at least one outflow pipe (40) is connected on the outlet side to at least one flexible tube (42), and that the height (49) of the outflow level (50) is adjusted by the height of the free end (43) of the flexible tube (42).

**16.** Method according to claim 15, characterised in that the purified liquid issuing from the planted filter bed (2) is passed through at least one outflow pipe (55) having an upwardly directed open end (56) and the height (49) of the outflow level (50) is adjusted by means of plug-on type tubular modules (57, 59) having a preselected length and plugged on to the open end (56).

**17.** Method according to claim 15, characterised in that the purified liquid issuing from the planted filter bed (2) is passed through at least one outflow pipe (5), that at least one upwardly angled branch pipe (66) is pivotably connected to the at least one outflow pipe (65) on the outlet side, and that the height (49) of the outflow level (50) is adjusted by the pivot angle of the branch pipe (66).

**18.** Installation for purifying liquids, containing a filter bed (2) which is planted with aquatic plants (1) and which has a predetermined infiltration cross-section and a soil matrix passed through by the liquid to be purified to an outflow (4) at a hydraulic gradient, characterised by control means on the outflow side for controlling the throughflow or throughflow pattern through the soil matrix of the planted filter bed (2) in a manner such that

a) there is provided at least one by-pass flow passage (15; 30) including adjusting means (13; 20; 37) on the side of the outflow for varying the throughflow cross-section and thus for regulating the proportional throughflow through the at least one by-pass flow passage (15; 30), said at least one by-pass flow passage (15; 30) being selected from

    a1. a gravel bed (9) placed below the filter bed (2) and including a predetermined number of discharge pipes (11), or

    a2. a predetermined number of lengthwise extending drain pipes (18), or

    a3. a predetermined number of transversely extending drain pipes (33)

and/or

b) outflow lift control means for controlling the height (49) of the outflow level (50) at at least one outflow pipe (40; 55; 65) and thus the hydraulic gradient between the height (47) of the inflow level (48) and the height (49) of the outflow level (50) in adaptation to the arriving inflow of the liquid to be purified such that there is maintained a fully hydromorphous state of the soil matrix having a defined hydraulic conductivity.

**19.** Installation according to claim 18, characterised in that the at least one by-pass flow passage (15) extends parallel to the planted filter bed (2), which has a defined hydraulic conductivity, and that the at least one by-pass flow passage (15) has a higher conductivity as compared to that of the planted filter bed (2).

**20.** Installation according to claim 18, characterised in that the at least one by-pass flow passage (15) is connected to the inflow (3) and the outflow (4) in parallel to the planted filter bed (2).

**21.** Installation according to claim 19 or 20, characterised in that the gravel bed (9) is poured onto a water-impervious foil (8), that the gravel bed (9) is closed on the side of the outflow by means of an outflow bar (10) which extends above the gravel bed (9) by a predetermined extent, and that the discharge pipes (11) extend along at least part of the length of the gravel bed (9) and through the outflow bar (11).

**22.** Installation according to claim 21, characterised in that the predetermined number of discharge pipes (11) are connected to a common gravel bed outflow (12) and the adjusting means are constructed as means for adjusting the throughflow cross-section of the common gravel bed outflow (12).

23. Installation according to claim 21, characterised in that the adjusting means (13) are disposed at each individual discharge pipe (11) and constructed as means for independently adjusting the throughflow cross-section of each individual discharge pipe (11).

24. Installation according to claim 21, characterised in that the gravel bed (9) is covered by a foil (14), which is degradable by the planted filter bed (2), on the side facing the planted filter bed (2).

25. Installation according to claim 20, characterised in that the predetermined number of lengthwise extending drain pipes (18) are embedded in the planted filter bed (2) and connected to a common lengthwise drain outflow (19).

26. Installation according to claim 25, characterised in that the lengthwisely extending drain pipes (18) are placed at the bottom of the planted filter bed (2).

27. Installation according to claim 25, characterised in that the adjusting means (20) are disposed at the common lengthwise drain outflow (19) and constructed as means for adjusting the throughflow cross-section of the common lengthwise drain outflow (19).

28. Installation according to claim 25, characterised in that the adjusting means (20) are disposed at each individual lengthwisely extending drain pipe (18) and constructed as means for independently adjusting the throughflow cross-section of each individual lengthwisely extending drain pipe (18).

29. Installation according to any one of claims 18 to 28, characterised in that the throughflow pattern is formed by a predetermined number of adjacent zones (31A, 31B) which extend substantially transverse to the throughflow direction (32) through the planted filter bed (2) and have a variable hydraulic gradient which is increased as compared to that of the planted filter bed (2) which is not transversely divided into zones (31A, 31B), and that the predetermined number of transversely extending drain pipes (33) are installed each at the bottom of the planted filter bed (2) and on the downstream side of the associated zone (31A, 31B) and connected to a common transverse drain outflow.

30. Installation according to claim 29, characterised in that the adjusting means are disposed at the common transverse drain outflow (34).

31. Installation according to claim 29, characterised in that the adjusting means (37) are disposed at each individual transversely extending drain pipe (33) and constructed as means for independently adjusting the through-flow cross-section of each individual transversely extending drain pipe (33).

32. Installation according to any one of claims 18 to 31, characterised in that the outflow (4) comprises at least one outflow pipe (40) receiving the purified liquid which issues from the planted filter bed (2), that at least one flexible tube (42) is connected to the outlet of the at least one outflow pipe (40), and that the adjusting means are constructed as means (44, 45, 46) for adjusting the height of the open free end (43) of the flexible tube (42).

33. Installation according to any one of claims 18 to 31, characterised in that the outflow (4) comprises at least one outflow pipe (55) including an upwardly directed open end (56), which outflow pipe receives the purified liquid issuing from the planted filter bed (2), and that the adjusting means are constructed as plug-on type tubular modules (57, 59) which are plugged onto the open end (56) of the at least one outflow pipe (55) and which have a predetermined length and open free ends (58, 60).

34. Installation according to any one of claims 18 to 31, characterised in that the outflow (4) comprises at least one outflow pipe (65) receiving the purified liquid which issues from the planted filter bed (2), that an upwardly angled branch pipe (66) having an open free end (67) is pivotably connected to an open end of the at least one outflow pipe (65), and that the adjusting means are constructed as pivot connection means (68) for adjusting a predetermined pivot angle of the branch pipe (66).

**Revendications**

1. Procédé destiné à l'épuration de liquides, dans lequel le liquide à épurer entre dans la matrice du sol d'un lit filtrant (2) planté de plantes aquatiques (1) et d'une coupe transversale d'infiltration prédéterminée, et passe par celui-ci sous un gradient hydraulique vers une décharge (4),

caracétrisé par le fait que le passage ou le dessin de passage par la matrice du sol du lit filtrant planté (2) est commandé sur le côté de la décharge tel que

(a) on prévu au moins une voie d'écoulement secondaire (15;30) munie de moyens d'ajustement (13;20;37) du côté de la décharge afin de varier la coupe transversale d'écoulement et de régler ainsi le passage proportionné par la ou les voies d'écoulement secondaires (15;30), cette ou ces voies d'écoulement secondaires (15;30) étant choisies alternativement de

a1. un cailloux (9) au-dessous du lit filtrant (2) avec un nombre prédéterminé de tuyaux de décharge (11), ou

a.2 un nombre prédéterminé de tuyaux de drainage longitudinal (18), ou

a3. un nombre prédéterminé de tuyaux de drainage transversal (33),

et/ou

(b) au moyen d'une commande de la levée de décharge sur au moins l'une des tuyaux de décharge (40;55;65), on règle la hauteur (49) du niveau de décharge (50) et ainsi du gradient hydraulique entre la hauteur (47) du niveau d'amenée (48) et la hauteur (49) du niveau de décharge (50) en adaptation à l'amenée actuelle du liquide à épurer de sorte que la hydromorphie complète de la matrice du sol possédant une conductibilité hydraulique déterminée, est maintenue.

2. Procédé selon la revendication 1, caractérisé par le fait que la ou les voies d'écoulement secondaires (15) sont disposées parallèlement au lit filtrant planté (2) d'une conductibilité hydraulique prédéterminée, la ou les voies d'écoulement secondaires ayant une conductibilité relativement élevée par rapport au lit filtrant planté (2).

3. Procédé selon la revendication 2, caractérisé par le fait que la ou les voies d'écoulement secondaires (15) sont raccordées, parallèlement au lit filtrant planté (2), à l'amenée (3) et à la décharge (4) du lit filtrant planté (2).

4. Procédé selon la revendication 2 ou 3, caractérisé par le fait que le cailloux (9) est remblayé sur une feuille (8) étanche à l'eau, que le cailloux (9) est fermé par un barrage de décharge (10) sur le côté de la décharge, barrage qui dépasse le cailloux (9) d'une mesure prédéterminée, et que le nombre prédéterminé de tuyaux de décharge (11) est posé sur une partie de la longueur du cailloux (9) et à travers le barrage de décharge (10).

5. Procédé selon la revendication 4, caractérisé par le fait que les tuyaux de décharge (11) sont raccordés à une décharge de cailloux commune (12), et que le passage proportionnel par le cailloux (9) est ajusté en variant la coupe transversale d'écoulement sur la décharge de cailloux (12) commune.

6. Procédé selon la revendication 4, caractérisé par le fait que le passage proportionnel par le cailloux (9) est ajusté par la variation indépendante de la coupe transversale d'écoulement sur chaque tuyau de décharge individuel (11) du nombre prédéterminé de tuyaux de décharge (11).

7. Procédé selon la revendication 4, caractérisé par le fait que le cailloux (9) est couvert par une feuille (14) sur le côté en face du lit filtrant planté (2), feuille qui est susceptible d'être décomposé par le lit filtrant planté (2).

8. Procédé selon la revendication 3, caractérisé par le fait que le nombre prédéterminé de tuyaux de drainage longitudinal (18) est raccordé à une décharge de drainage longitudinal commune (19).

9. Procédé selon la revendication 8, caractérisé par le fait que les tuyaux de drainage longitudinal (18) sont posés sur la sole du lit filtrant planté (2).

10. Procédé selon la revendication 8, caractérisé par le fait que le passage proportionné par les tuyaux de drainage longitudinal (18) est ajusté en variant la coupe transversale d'écoulement sur la décharge de drainage longitudinal (19) commune.

11. Procédé selon la revendication 8, caractérisé par le fait que le passage proportionné par les tuyaux de drainage longitudinal (18) est ajusté par la variation indépendante de la coupe transversale d'écoulement sur chaque tuyau de drainage individuel (18) du nombre prédéterminé de tuyaux de décharge (18).

12. Procédé selon l'une des revendications 1 à 11, caractérisé par le fait que le dessin de passage d'écoulement est formé par un nombre prédéterminé de zones adjacentes (31A,31B) s'étendant essentiellement transversalement à la direction de passage d'écoulement (32) par le lit filtrant planté (2), et possédant un gradient hydraulique variable accru par rapport au lit filtrant planté (2), et que le nombre prédéterminé de tuyaux de drainage transversal (33) est posé chaucun sur la sole du lit filtrant planté (2) sur le côté en aval de la zone associée (31A,31B).

13. Procédé selon la revendication 12, caractérisé par le fait que le nombre prédéterminé de tuyaux de drainage transversal (33) est raccordé en dehors du lit filtrant planté (2) à une décharge de drainage transversal (34) commune, et que le gradient hydraulique est ajusté en variant la coupe transversale d'écoulement sur la décharge de drainage transversal (34) commune.

14. Procédé selon la revendication 12, caractérisé par le fait que le nombre prédéterminé de tuyaux de drainage (33) est raccordé en dehors du lit filtrant planté (2) à une décharge de drainage transversal (34) commune, et que le gradient hydraulique est ajusté par la variation indépendante de la coupe transversale d'écoulement de chaque tuyau de drainage transversal (33) individuel.

15. Procédé selon l'une des revendications 1 à 14, caractérisé par le fait que le liquide épuré sortant du lit filtrant planté (2) est guidé par au moins un tuyau de décharge (40), que le ou les tuyaux de décharge (40) sont raccordés à un tuyau flexible (42) sur le côté de la sortie, et que la hauteur (49) du niveau de décharge (50) est ajustée par la hauteur de l'extrémité libre (43) du tuyau flexible (42).

16. Procédé selon la revendication 15, caractérisé par le fait que le liquide épuré sortant du lit filtrant planté (2) est guidé par au moins un tuyau de décharge (55) avec une extrémité (56) ouverte vers le haut, et que la hauteur (49) du niveau de décharge (50) est ajustée par un module embrôchable tubulaire (57,59) d'une longueur préchoisie, qui peut être embrôché sur l'extrémité ouverte (56).

17. Procédé selon la revendication 15, caractérisé par le fait que le liquide épuré sortant du lit filtrant planté (2) est guidé par au moins un tuyau de décharge (65), qu'au moins un bras de tuyau (66) coudé vers le haut est raccordé sur le côté de la sortie au tuyau de décharge (65) de sorte qu'il peut pivoter, et que la hauteur (49) du niveau de décharge (50) est ajustée par l'angle de pivotement du bras de tuyau (66).

18. Installation destinée à l'épuration de liquides, comprenant un lit filtrant planté (2) de plantes aquatiques (1) et d'une coupe transversale d'inflitration prédéterminée, et une matrice de sol par lequel le liquide à épurer passe sous un gradient hydraulique vers une décharge (4),
    caracétrisé par une commande sur le côté de la décharge pour le passage ou le dessin de passage par la matrice du sol du lit filtrant planté (2), tel que
    (a) on prévu au moins une voie d'écoulement secondaire (15;30) munie de moyens d'ajustement (13;20;37) du côté de la décharge afin de varier la coupe transversale d'écoulement et de régler ainsi le passage proportionné par la ou les voies d'écoulement secondaires (15;30), cette ou ces voies d'écoulement secondaires (15;30) étant choisies alternativement de
        a1. un cailloux (9) au-dessous du lit filtrant (2) avec un nombre prédéterminé de tuyaux de décharge (11), ou
        a.2 un nombre prédéterminé de tuyaux de drainage longitudinal (18), ou
        a3. un nombre prédéterminé de tuyaux de drainage transversal (33),
        et/ou
    (b) une commande de la levée de décharge pour la hauteur (49) du niveau de décharge (50) sur au moins l'une des tuyaux de décharge (40;55;65), et ainsi du gradient hydraulique entre la hauteur (47) du niveau d'amenée (48) et la hauteur (49) du niveau de décharge (50) en adaptation à l'amenée actuelle du liquide à épurer de sorte que la hydromorphie complète de la matrice du sol possédant une conductibilité hydraulique déterminée, est maintenue.

19. Installation selon la revendication 18, caractérisée par le fait que la ou les voies d'écoulement secondaires (15) s'étendent parallèlement au lit filtrant planté (2) d'une conductibilité hydraulique prédéterminée, et que la ou les voies d'écoulement secondaires ont une conductibilité relativement élevée par rapport au lit filtrant planté (2).

20. Installation selon la revendication 18, caractérisée par le fait que la ou les voies d'écoulement secondaires (15) sont raccordées, parallèlement au lit filtrant planté (2), à l'amenée (3) et à la décharge (4).

21. Installation selon la revendication 19 ou 20, caractérisée par le fait que le cailloux (9) est remblayé sur une feuille (8) étanche à l'eau, que le cailloux (9) est fermé par un barrage de décharge (10) sur le côté de la décharge, barrage qui dépasse le cailloux (9) d'une mesure prédéterminée, et que les tuyaux de décharge (11) s'étendent au moins sur une partie de la longueur du cailloux (9) et à travers le barrage de décharge (10).

22. Installation selon la revendication 21, caractérisée par le fait que le nombre prédéterminé de tuyaux de décharge (11) sont raccordés à une décharge de cailloux commune (12), et que les moyens d'ajustement sont formés comme moyens destinés à l'ajustement de la coupe transversale d'écoulement de la décharge de cailloux (12) commune.

23. Installation selon la revendication 21, caractérisée par le fait que les moyens d'ajustement (13) sont disposés sur chaque tuyau de décharge individuel (11) et qu'ils sont formés comme moyens destinés à l'ajustement indépendant de la coupe transversale d'écoulement de chaque tuyau de décharge individuel (11).

24. Installation selon la revendication 21, caractérisée par le fait que le cailloux (9) est couvert par une feuille (14) sur le côté en face du lit filtrant planté (2), feuille qui est susceptible d'être décomposé par le lit filtrant planté (2).

25. Installation selon la revendication 20, caractérisée par le fait que le nombre prédéterminé de tuyaux de drainage longitudinal (18) est encastré dans le lit filtrant planté (2) et raccordé à une décharge de drainage longitudinal commune (19).

26. Installation selon la revendication 25, caractérisée par le fait que les tuyaux de drainage longitudinal (18) sont posés sur la sole du lit filtrant planté (2).

27. Installation selon la revendication 25, caractérisée par le fait que les moyens d'ajustement (20) sont disposés sur la décharge de drainage longitudinal (19) commune et qu'ils sont formés comme moyens destinés à l'ajustement de la coupe transversale d'écoulement la décharge de drainage longitudinal (19) commune.

28. Installation selon la revendication 25, caractérisée par le fait que les moyens d'ajustement (20) sont disposés sur chaque tuyau de drainage longitudinal (18) individuel, et qu'ils sont formés comme moyens destinés à l'ajustement indépendant de la coupe transversale d'écoulement de chaque tuyau de drainage longitudinal (18) individuel.

29. Installation selon l'une des revendications 18 à 28, caractérisée par le fait que le dessin de passage d'écoulement est formé par un nombre prédéterminé de zones adjacentes (31A,31B) s'étendant essentiellement transversalement à la direction de passage d'écoulement (32) par le lit filtrant planté (2), et possédant un gradient hydraulique variable accru par rapport au lit filtrant planté (2) non-divisé transversalement en zones (31A,13B), et que le nombre prédéterminé de tuyaux de drainage transversal (33) est posé chaucun sur la sole du lit filtrant planté (2) sur le côté en aval de la zone associée (31A,31B) et raccordé à une décharge de drainage transversal (34) commune.

30. Installation selon la revendication 29, caractérisée par le fait que les moyens d'ajustement sont disposés sur la décharge de drainage transversal (34) commune.

31. Installation selon la revendication 29, caractérisée par le fait que les moyens d'ajustement (37) sont disposés sur chaque tuyau de drainage transversal (33) individuel et formés comme moyens destinés à l'ajustement indépendant de la coupe transversal d'écoulement de chaque tuyau de drainage transversal (33) individuel.

32. Installation selon l'une des revendications 18 à 31, caractérisée par le fait que la décharge (4) a au moins un tuyau de décharge (40) recevant le liquide épuré sortant du lit filtrant planté (2), qu'au moins un tuyau flexible (42) est raccordé à la sortie du ou des tuyaux de décharge (40), et que les moyens d'ajustement sont formés comme moyens (44,45,46) destinés à l'ajustement de la hauteur de l'extrémité libre ouverte (43) du tuyau flexible (42).

33. Installation selon la revendication 18 à 31, caractérisée par le fait que la décharge (4) présente au moins un tuyau de décharge (55) avec une extrémité (56) ouverte vers le haut et recevant le liquide épuré sortant du lit filtrant planté (2), et que les moyens d'ajustement sont formés comme module embrôchable tubulaire (57,59) d'une longueur prédéterminé, qui peut être embrôché sur l'extrémité libre ouverte (58,60).

34. Installation selon la revendication 18 à 31, caractérisée par le fait que la décharge (4) présente au moins un tuyau de décharge (65) recevant le liquide épuré sortant du lit filtrant planté (2), qu' un bras de tuyau (66) coudé vers le haut avec une extrémité libre ouverte (67) est raccordé à une extrémité libre de ou des tuyaux de décharge (65) de sorte qu'il peut pivoter, et que les moyens d'ajustement sont formés comme moyens de connexion de pivotement (68) destinés à l'ajustement d'un angle de pivotement prédéterminée du bras de tuyau (66).

Fig.1

EP 0 243 678 B1

Fig. 2

EP 0 243 678 B1

EP 0 243 678 B1

Fig.3

Fig.4c

Fig.4b

Fig.4a

*Fig.5*

23